Europäisches Patentamt

European Patent Office

Office européen des brevets

(19)

(11) Veröffentlichungsnummer: **0 176 735**
**B1**

(12) **EUROPÄISCHE PATENTSCHRIFT**

(45) Veröffentlichungstag der Patentschrift: **17.10.90**

(51) Int. Cl.⁵: **G 01 L 21/16**

(21) Anmeldenummer: **85110411.7**

(22) Anmeldetag: **20.08.85**

(54) **Verfahren zur Druckmessung mit einem Gasreibungsvakuummeter und Gasreibungsvakuummeter zur Durchführung des Verfahrens.**

(30) Priorität: **28.08.84 DE 3431517**

(43) Veröffentlichungstag der Anmeldung:
**09.04.86 Patentblatt 86/15**

(45) Bekanntmachung des Hinweises auf die
Patenterteilung:
**17.10.90 Patentblatt 90/42**

(84) Benannte Vertragsstaaten:
**AT BE CH DE FR GB IT LI LU NL SE**

(56) Entgegenhaltungen:
EP-A-0 040 405
EP-A-0 146 647
DE-A-2 945 889

(73) Patentinhaber: **Forschungszentrum Jülich GmbH**
**Postfach 1913**
**D-5170 Jülich (DE)**

(73) Patentinhaber: **RWD Datentechnik GmbH**
**Hubert-Wienenstrasse 24**
**D-5100 Aachen (DE)**

(72) Erfinder: **Fremerey, Johan Kristian, Dr.**
**Mönkemöllerstrasse 19**
**D-5300 Bonn 1 (DE)**
Erfinder: **Lindenau, Bernd**
**732 Clopper Rd. Apt. No. 12**
**Gaithersburg, MD, 20878 (US)**
Erfinder: **Witthauer, Klaus**
**Kalkbergstrasse 171**
**D-5100 Aachen-Verlautenheide (DE)**

## Beschreibung

Die Erfindung bezieht sich auf ein Verfahren zur Druckmessung mit einem Gasreibungsvakuummeter und auf spezielle Ausbildungen eines Gasreibungsvakuummeters zur Durchführung des Verfahrens. Das Gasreibungsvakuummeter weist im Meßkopf einen in magnetischem Feld berührungslos gelagerten Rotationskörper auf, der mit Hilfe von Antriebsspulen, die den Rotationskörper umgeben, in Drehung versetzt und oberhalb einer vorgegebenen minimalen Drehfrequenz gehalten wird. Infolge von Gasreibung auftretende Drehzahlverminderungen des Rotationskörpers werden durch kontinuierliche oder intermittierende Beaufschlagung der Antriebsspulen mit Wechselstrom ausgeglichen, der von einem Drehstromgenerator erzeugt wird. Zur Erfassung der Drehfrequenz des Rotationskörpers sind im Meßkopf Sensoren angeordnet, die ihre Signale an eine elektronische Rechnereinheit weitergeben, welche aus der zeitlichen Veränderung der Drehfrequenz den Druck des den Rotationskörper umgebenden Gases ermittelt.

Es ist bekannt, Gasreibungsvakuummeter mit freirotierenden Rotationskörpern als Meßinstrumente zur Bestimmung des Druckes im Hochvakuumbereich einzusetzen, vergleiche beispielsweise DE-PS 30 19 315 C2. Der Meßbereich der bekannten Instrumente ist auf einen Druckbereich unterhalb von ca. 0,1 mbar beschränkt. Dies ist darauf zurückzuführen, daß die zur Druckbestimmung gemessene Gasreibung bei geringem Gasdruck im Hochvakuum proportional mit dem Druck zunimmt, bei höherem Gasdruck jedoch nur noch sehr schwach ansteigt. Bei Gasdrücken über 0,1 mbar wird die Gasreibung im wesentlichen durch die Viskosität des Gases bestimmt, die jedoch weitgehend druckunabhängig ist. Die Viskosität wird vielmehr von der Temperatur des Gases stark beeinflußt. Dies ist Ursache dafür, daß die verbleibende, sehr geringe Druckabhängigkeit der Gasreibung bei höherem Druck von den Viskositätseinflüssen in unerwünschtem Maße überlagert wird, was zu Unsicherheiten bei der Druckmessung führt.

Der Einsatz eines Thermostaten, der den Meßkopf auf konstanter Temperatur hält, löst das Problem nicht, weil der Rotationskörper durch das Drehfeld, das die Antriebsspulen zur Aufrechterhaltung der minimalen Drehzahl des Rotationskörpers erzeugen, unregelmäßig aufgeheizt wird. Temperaturschwankungen sind somit unvermeidlich. Hinzu kommt die Erwärmung des Meßkopfes und der den Rotationskörper umschließenden Vakuumkammer durch die in den Antriebsspulen umgesetzte elektrische Leistung. Das den Rotationskörper umgebende Gas weist somit im Wärmeaustausch mit Rotationskörper und Vakuumkammer Temperaturschwankungen auf, die die Gasreibung beeinflussen. Bei einer Veränderung der am Rotationskörper gemessenen Gasreibung kann infolge dessen nicht festgestellt werden, ob diese durch eine Änderung der Temperatur oder durch Druckänderung verursacht worden ist. Die thermischen Fluktuationen im Meßkopf behindern somit den Einsatz des Gasreibungsvakuummeters zur Druckmessung im Bereich oberhalb von 0,1 mbar.

Aufgabe der Erfindung ist es, den Einsatzbereich der Gasreibungsvakuummeter zu höheren Drücken hin zu erweitern. Die von der Viskosität beeinflußte, temperaturbedingte Veränderung der Gasreibung soll für die Druckanzeige weitestgehend unterdrückt werden.

Diese Aufgabe wird bei einem Verfahren der eingangs genannten Art gemäß der Erfindung durch die in Patentanspruch 1 angegebenen Maßnahmen gelöst. Es wird der Rechnereinheit ein mit der Temperatur des den Rotationskörper umgebenden Gases korrelierendes Signal in der Weise eingegeben, daß der Einfluß der Temperatur des Gases, das durch den Antrieb des Rotationskörpers erwärmt wird, auf die Druckmessung korrigiert wird. Die Rechnereinheit berechnet mit Hilfe des Signals eine Korrekturgröße für die temperaturbedingte Veränderung der Gasreibung infolge der sich ändernden Viskosität des Gases. Die rechnerische Korrekturgröße ergibt sich aus dem Zusammenhang zwischen Gastemperatur und Viskosität nach der Gastheorie. Danach ist die Viskosität näherungsweise proportional der Wurzel aus der absoluten Gastemperatur. Die Korrelation zwischen elektrischem Signal und Temperatur des den Rotationskörper umgebenden Gases ist experimentell zu ermitteln. Zu bevorzugen sind Signale, die mit der Gastemperatur linear korrelieren.

Eine vorteilhafte Ausgestaltung der Erfindung besteht nach Patentanspruch 2 darin, als Signal, das mit der Temperatur korreliert, die zeitliche Abnahme der Drehfrequenz des Rotationskörpers bei intermittierendem Antrieb während der Ausschaltphasen des Drehstromgenerators zu verwenden. Die Drehzahlabnahme des Rotationskörpers ist der aufzubringenden effektiven Generatorleistung proportional und steht im Rechner als Zwischengröße für die Berechnung des Druckes ohnehin zur Verfügung. Die Drehzahlabnahme als Korrelat für die Temperatur des den Rotationskörper umgebenden Gases zu nutzen, beruht auf folgender Überlegung: Aus der Drehzahlabnahme des Rotationskörpers läßt sich die erforderliche Antriebsleistung zur Aufrechterhaltung der Rotation oberhalb der vorgegebenen minimalen Drehfrequenz ermitteln. Diese Antriebsleistung bewirkt den Temperaturanstieg im Meßkopf. Die resultierende Temperatur im Gas stellt sich jedochnicht augenblicklich, sondern mit einer im wesentlichen durch die Wärmekapazität des Meßkopfes bestimmten Zeitverzögerung ein. Unter Berücksichtigung dieser Zeitverzögerung korreliert die Drehzahlabnahme des Rotationskörpers mit der Temperatur des Gases, das den Rotationskörper umgibt, und kann als Signal für die Ermittlung der herrschenden Temperatur in der Umgebung des Rotationskörpers dienen.

Die zur Aufrechterhaltung der Rotation erforderliche effektive Antriebsleistung des Drehstromgenerators läßt sich auch direkt aus der relativen Einschaltdauer des Drehstromgenerators ermitteln, Patentanspruch 3. Die effektive Antriebsleistung ist gleich dem Produkt aus Ausgangsleistung des Drehstromgenerators und relativer Einschaltdauer. Bei bekannter Ausgangsleistung ist somit nur noch die relative Einschaltdauer zu messen, wobei das mit der Gastemperatur korrelierende Signal wiederum unter Berücksichtigung der oben erläuterten Zeitverzögerung zu ermitteln ist.

Zur Durchführung des Verfahrens eignet sich auch eine in Patentanspruch 4 angegebene spezielle Ausgestaltung des Gasreibungsvakuummeters. Gemäß der Erfindung ist im Meßkopf in der Nähe des Rotationskörpers ein Temperatursensor angeordnet, mit dem die Temperatur des den Rotationskörper umgebenden Gases bestimmt wird. Die Signale des Temperatursensors werden der Rechnereinheit so aufgeschaltet, daß die Temperaturschwankungen des Gases bei der Druckbestimmung berücksichtigt werden. Als Temperatursensor können ein Thermoelement oder ein Meßwiderstand eingesetzt werden. Der Temperatursensor wird vorzugsweise in geringer Entfernung vom Rotationskörper angeordnet, so daß die zu erwartenden Abweichungen zwischen der nicht direkt zugänglichen Gastemperatur am Rotationskörper und der Temperatur am Ort des Temperatursensors möglichst gering sind.

Zweckmäßig sind als Temperatursensor im Meßkopf ein oder mehrere elektrische Spulen angeordnet, die mit einem den Widerstand der Spulen ermittelnden Widerstandsmesser in Verbindung stehen, mit dessen Signalen die Rechnereinheit beaufschlagt wird, Patentanspruch 5. Dabei lassen sich in vorteilhafter Weise solche Spulen verwenden, die als Bauteile im Meßkopf bereits vorhanden sind.

Keine zusätzlichen Bauteile im Meßkopf benötigt auch ein gemäß Patentanspruch 6 ausgebildetes Gasreibungsvakuummeter. Bei diesem Gasreibungsvakuumeter wird als ein mit der Gastemperatur korrelierendes elektrisches Signal die vom Drehstromgenerator übertragene elektrische Leistung genützt. Zu berücksichtigen ist, daß die Temperatur im Meßkopf nach einer Änderung der Generatorleistung erst mit zeitlicher Verzögerung entsprechend der Wärmekapazität des Meßkopfes vom bestehenden Wert abweicht. Diese zeitliche Verzögerung der Temperaturänderung gegenüber der Leistungsänderung wird experimentell ermittelt und durch eine elektronische Verzögerungsschaltung oder mittels der Rechnereinheit simuliert.

Die Erfindung wird im folgenden anhand eines in der Zeichnung schematisch wiedergegebenen Ausführungsbeispiels näher erläutert. Die Figuren zeigen im einzelnen:

Figur 1 perspektivisches Schnittbild eines Meßkopfes eines Gasreibungsvakuummeters mit kugelförmigem Rotationskörper

Figur 2 Schaltbild für die der Rechnereinheit aufzugebenden Signale

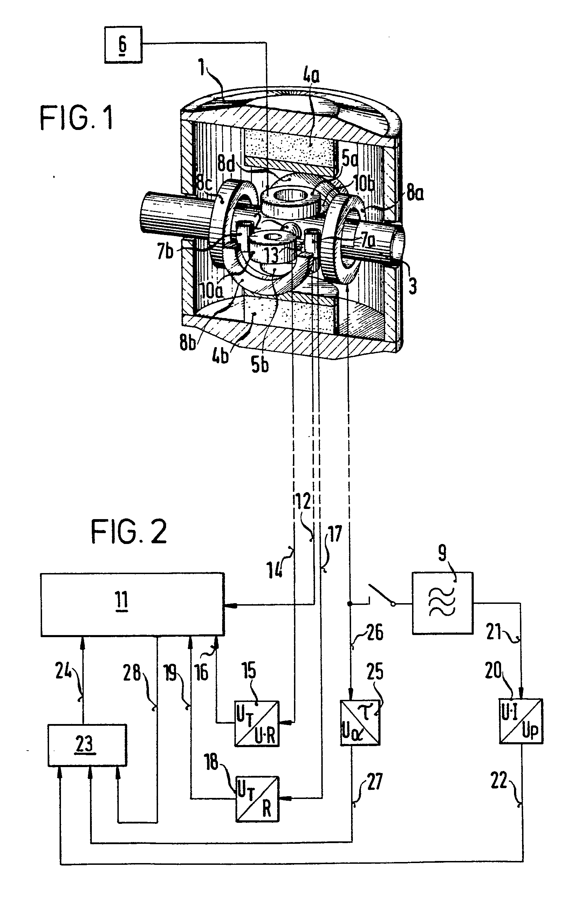

Figur 1 zeigt einen Meßkopf 1 mit kugelförmigem Rotationskörper 2, der zum Anschluß an ein Vakuumsystem in einem dünnwandigen Metallrohr 3 eingekapselt ist.

Eine berührungslose Lagerung des aus magnetisierbarem Material gefertigten Rotationskörpers 2 wird mittels zweier Permanentmagnete 4a, 4b und zweier elektrischer Spulen 5a, 5b sowie eines elektrischen Reglers 6 unter Aufwand geringer elektrischer Energie aufrechterhalten. Vier weitere um den Rotationskörper 2 angeordnete elektrische Spulen 7a bis 7d (in Fig. 1 sind nur die Spulen 7a, 7b sichtbar) sorgen für die Dämpfung von seitlichen Schwingungen des Rotationskörpers.

Der Rotationskörper 2 wird mittels Antriebsspulen 8a bis 8d, die mit einem Drehstromgenerator 9 (mit Schalter 9' und Zuleitung 9'') in Verbindung stehen, elektrisch angetrieben. Der Rotationskörper ist zentrisch zwischen den Antriebsspulen angeordnet. Zur Erfassung der Drehzahl des Rotationskörpers 2 dienen als Sensoren zwei Abtastspulen 10a, 10b. In diesen Abtastspulen wird durch die mit der Drehfrequenz umlaufende Komponente der Magnetisierung des Rotationskörpers eine drehzahlsynchrone elektrische Spannung induziert. Die Abtastspulen stehen mit einer Rechnereinheit 11 in Verbindung, die als Funktionseinheit in Figur 2 eingetragen ist. Die Signale der Abtastspulen werden der Rechnereinheit über eine Signalleitung 12 aufgegeben. Die Rechnereinheit ermittelt die zeitliche Änderung der Drehfrequenz des Rotationskörpers 2. Aus dieser Änderung lassen sich der Druck oder auch andere Parameter des den Rotationskörper umgebenden Gases berechnen.

Innerhalb des Kopfes 1 befindet sich in der Nähe des Rotationskörpers 2 ein Temperatursensor 13, der im Ausführungsbeispiel am Metallrohr 3 befestigt ist, das zum Vakuumsystem führt. Die Temperatur des Metallrohres 3 entspricht an der Meßstelle mit ausreichender Näherung der Temperatur des den Rotationskörper umgebenden Gases, dessen Druck zu messen ist. Der Temperatursensor 13 ist über eine Signalleitung 14 mit dem Eingang eines Wandlers 15 verbunden, dessen Ausgang über eine Signalleitung 16 zur Rechnereinheit 11 führt. Im Wandler 15 werden die vom Temperatursensor 13 abgegebenen Signale (Spannung U oder Widerstand R) in eine zur Rechnereinheit geführte Spannung $U_T$ transformiert.

Anstelle des Temperatursensors 13 sind auch eine oder mehrere elektrische Spulen 5a, 5b, 7a bis 7d oder 8a bis 8d als Widerstandsthermometer verwendbar. Im Ausführungsbeispiel wird von der elektrischen Spule 7a über eine Signalleitung 17 ein Widerstandswert R abgegriffen, der im Wandler 18 in eine proportional mit dem Widerstand sich verändernde Spannung $U_T$ umgewandelt wird. Vom Wandler 18 führt eine Signalleitung 19 zur Rechnereinheit 11.

Desweiteren wird im Ausführungsbeispiel die Eingangsleistung des Drehstromgenerators 9 von einem als Leistungsmesser dienenden Wandler 20 abgegriffen, der über eine Signalleitung 21 mit dem Drehstromgenerator 9 in verbindung steht.

Vom Wandler 20 geht ein mit der Eingangsleistung U.I proportionale Spannung $U_p$ aus, die über eine Signalleitung 22 einem Integrator 23 zugeführt wird. Der Integrator simuliert die zeitliche Verzögerung der Temperaturänderung gegenüber der Leistungsänderung des Drehstromgenerators und gibt ein der Temperatur entsprechendes Signal $U_T$ über die Signalleitung 24 an die Rechnereinheit 11 weiter.

Von einem weiteren Wandler 25 wird als Eingangswert lediglich die relative Einschaltdauer τ des Drehstromgenerators 9 bei intermittierendem Betrieb registriert. Für die Ankopplung an den Drehstromgenerator 9 dient in diesem Fall eine Signalleitung 26. Voraussetzung für die Verwendung der relativen Einschaltdauer als Maß für die Temperatur des den Rotationskörper umgebenden Gases ist, daß die Generatorleistung in allen Einschaltphasen konstant bleibt. Im Wandler 25 wird die relative Einschaltdauer in eine elektrische Spannung Uα transformiert und über die Signalleitung 27 zum Integrator 23 geleitet. Der Integrator 23 verarbeitet die Spannung Uα in gleicher Weise wie die vom Wandler 25 abgegebene Spannung $U_p$ und gibt eine entsprechende Spannung $U_T$ an die Rechnereinheit 11 ab.

Mit Hilfe des Integrators 23 läßt sich die Korrektur der anzugebenden Druckwerte auch über Signale erreichen, die von der Rechnereinheit 11 bei der Druckberechnung ohnehin ermittelt werden. Als Signalwert wird die Drehzahlabnahme des Rotationskörpers in den Betriebszeiten des Meßkopfes 1 verwendet, in denen der Drehstromgenerator keine Antriebsleistung abgibt, d.h. also in den Ausschaltphasen des Drehstromgenerators. Die Drehzahlabnahme wird von der Rechnereinheit über eine Signalleitung 28 dem Integrator 23 aufgegeben.

In den drei zuletzt genannten Fällen wird die Temperaturkorrektur der Druckwerte ohne jeglichen Eingriff in den Meßkopf 1 ermöglicht.

**Patentansprüche**

1. Verfahren zur Druckmessung mit einem Gasreibungsvakuummeter, in dessen Meßkopf zwischen elektrischen Antriebsspulen in magnetischem Feld ein Rotationskörper berührungslos gelagert ist, der mit Hilfe der Antriebsspulen in Drehung versetzt und oberhalb einer vorgegebenen minimalen Drehfrequenz gehalten wird, wobei infolge von Gasreibung auftretende Drehzahlverminderungen des Rotationskörpers durch kontinuierliche oder intermittierende Beaufschlagung der Antriebsspulen mit Wechselstrom aus einem Drehstromgenerator ausgeglichen werden, sowie mit im Meßkopf angeordnete Sensoren, die zur Erfassung der Drehfrequenz des Rotationskörpers dienen und ihre Signale an eine elektronische Rechnereinheit weitergeben, welche aus der zeitlichen Veränderung der Drehfrequenz den Druck des den Rotationskörper umgebenden Gases ermittelt, dadurch gekennzeichnet, daß die Rechnereinheit zusätzlich mit einem elektrischen Signal, das mit der Temperatur des den Rotationskörper umgebenden Gases korreliert, in der Weise beaufschlagt wird, daß der Einfluß der durch den Antrieb des Rotationskörpers auf das Gas übertragenen Wärme auf die Druckmessung korrigiert wird.

2. Verfahren nach Anspruch 1, dadurch gekennzeichnet, daß bei intermittierendem Antrieb die zeitliche Abnahme der Drehfrequenz des Rotationskörpers in den Ausschaltphasen des Drehstromgenerators als mit der Temperatur korrelierendes Signal verwendet wird.

3. Verfahren nach Anspruch 1, dadurch gekennzeichnet, daß die relative Einschaltdauer des Drehstromgenerators als mit der Temperatur korrelierendes Signal verwendet wird.

4. Gasreibungsvakuummeter zur Durchführung des Verfahrens nach Anspruch 1 mit im Meßkopf in magnetischem Feld berührungslos gelagertem Rotationskörper, der von den Rotationskörper umgebenden, mit Wechselstrom gespeisten elektrischen Antriebsspulen in Drehung versetzbar ist, sowie mit im Meßkopf angeordneten Sensoren zur Erfassung der Drehfrequenz des Rotationskörpers, und mit einer Rechnereinheit, die mit Signalen der Sensoren beaufschlagt ist und den Druck des Gases um den Rotationskörper angibt, dadurch gekennzeichnet, daß in der Nähe des Rotationskörpers (2) ein Temperatursensor (13) zur Bestimmung der Gastemperatur angeordnet ist, dessen Signale auf die Rechnereinheit (11) übertragen werden.

5. Gasreibungsvakuummeter nach Anspruch 4, dadurch gekennzeichnet, daß als Temperatursensor ein oder mehrere Spulen (7a) verwendet sind, deren Widerstandswert als Signal für die Rechnereinheit (11) abgegriffen wird.

6. Gasreibungsvakuummeter zur Durchführung des Verfahrens nach Anspruch 1 mit im Meßkopf in magnetischem Feld berührungslos gelagertem Rotationskörper, der von den Rotationskörper umgebenden, mit Wechselstrom kontinuierlich oder intermittierend gespeisten elektrischen Antriebsspulen in Drehung versetzbar ist, wobei der Wechselstrom von einem Drehstromgenerator erzeugt ist, sowie mit im Meßkopf angeordneten Sensoren zur Erfassung der Drehfrequenz des Rotationskörpers und mit einer Rechnereinheit, die mit Signalen der Sensoren beaufschlagt ist und den Druck des Gases um den Rotationskörper angibt, dadurch gekennzeichnet, daß ein Leistungsmesser (20) für den Drehstromgenerator (9) eingesetzt ist, dessen Signale auf die Rechnereinheit (11) übertragen werden.

**Revendications**

1. Procédé de mesure de la pression avec un indicateur de vide sensible au frottement d'un gaz, dans la tête de mesure duquel est monté sans contact, entre des bobines électriques d'entraînement dans un champ magnétique, un corps de révolution qui est mis en rotation à l'aide des bobines d'entraînement et qui est maintenu au-delà d'une fréquence de rotation minimum prescrite, les diminutions de vitesse de rotation du corps de révolution dues au frottement du gaz étant compensées par alimentation, continue ou intermittente, des bobines d'entraînement en courant alternatif provenant d'un générateur de courant triphasé, ainsi qu'avec des détecteurs qui sont disposés dans la tête de mesure, qui servent à détecter la fréquence de rotation du corps de révolution et qui envoient leurs signaux à une unité électronique de calcul qui détermine la pression du gaz entourant le corps de révolution à partir de la variation de la fréquence de rotation dans le temps, caractérisé en ce qu'il consiste à envoyer, à l'unité de calcul, en outre un signal électrique corrélé à la température du gaz entourant le corps de révolution de manière à corriger l'influence sur la mesure de la pression de la chaleur transmise au gaz par l'entraînement du corps de révolution.

2. Procédé suivant la revendication 1, caractérisé en ce qu'il consiste, dans le cas d'un entraînement intermittent, à utiliser la décroissance en fonction du temps de la fréquence de rotation du corps de révolution, dans les phases de mise hors tension du générateur de courant triphasé, comme signal corrélé à la température.

3. Procédé suivant la revendication 1, caractérisé en ce qu'il consiste à utiliser la durée relative de mise sous tension du générateur de courant triphasé comme signal corrélé à la température.

4. Indicateur de vide sensible au frottement d'un gaz pour la mise en oeuvre du procédé suivant la revendication 1, comprenant un corps de révolution monté sans contact dans le champ magnétique, dans la tête de mesure, et pouvant être mis en rotation par des bobines d'entraînement électriques alimentées en courant alternatif, ainsi que des détecteurs qui sont disposés dans la tête de mesure et qui sont destinés à détecter la fréquence de rotation du corps de révolution, et une unité de calcul qui reçoit des signaux des détecteurs et qui indique la pression du gaz autour du corps de révolution, caractérisé en ce qu'à proximité du corps de révolution (2), est prévue une sonde de température (13) qui détermine la température du gaz et dont les signaux sont envoyés à l'unité de calcul (11).

5. Indicateur de vide sensible au frottement d'un gaz suivant la revendication 4, caractérisé en ce qu'une ou plusieurs bobines (7a), dont la valeur de la résistance est prélevée comme signal pour l'unité de calcul (11), est utilisée comme sonde de température.

6. Indicateur de vide sensible au frottement d'un gaz pour la mise en oeuvre du procédé suivant la revendication 1, comprenant un corps de révolution monté sans contact dans le champ magnétique, dans la tête de mesure, et pouvant être mis en rotation par des bobines électriques d'entraînement alimentées, continuellement ou par intermittence, en courant alternatif, le courant alternatif étant obtenu par un générateur de courant triphasé, et des détecteurs, qui sont disposés dans la tête de mesure et qui détectent la fréquence de rotation du corps de révolution et une unité de calcul qui reçoit des signaux des détecteurs et qui indique la pression du gaz autour du corps de révolution, caractérisé en ce qu'un wattmètre (20) est utilisé, pour le générateur de courant triphasé (9), dont les signaux sont transmis à l'unité de calcul (11).

**Claims**

1. Method of measuring pressure with a gas viscometer vacuum gauge, in the measuring head of which a rotating body is mounted contact-free between electric driving coils in a magnetic field, said rotating body being set in rotation and kept above a preset minimum rotational frequency with the aid of the driving coils, decelerations in the speed of the rotating body as a result of gas friction being compensated by continuously or intermittently applying alternating current from a three-phase generator to the driving coils, as well as having sensors disposed in the measuring head and used to detect the rotational frequency of the rotating body, and which send their signals to an electronic computing unit which determines the pressure of the gas surrounding the rotating body from the change in rotational frequency over time, characterised by additionally addressing to the computing unit an electrical signal that correlates with the temperature of the gas surrounding the rotating body, such that the effect on the pressure measurement of the heat transmitted to the gas by driving the rotating body is corrected.

2. Method according to claim 1, characterised in that during intermittent driving, chronological sampling of the rotational frequency of the rotating body in the OFF-phases of the three-phase generator is used as the signal correlating with the temperature.

3. Method according to claim 1, characterised in that the relative ON-time of the three-phase generator is used as the signal correlating with the temperature.

4. Gas viscometer vacuum gauge for carrying out the method according to claim 1, with a rotating body mounted contact-free in a magnetic field in the measuring head, which body is adapted to be set in rotation by electic driving coils surrounding the rotating body and supplied with alternating current, as well as with sensors disposed in the measuring head for detecting the rotational frequency of the rotating body, and with a computing unit to which signals from the sensors are applied and which indicates the pressure of the gas around the rotating body, characterised in that near the rotating body (2) is disposed a temperature sensor (13) for determining the gas temperature, the signals from which sensor are communicated to the computing unit (11).

5. Gas viscometer vacuum gauge according to claim 4, characterised in that as the temperature sensor one or more coils (7a) are used whose resistance level is tapped as the signal for the computing unit (11).

6. Gas viscometer vacuum gauge for carrying out the method according to claim 1, with a rotating body mounted contact-free in a magnetic field in the measuring head, said rotating body being adapted to be set in rotation by electric driving coils surrounding the rotating body and supplied continuously or intermittently with alternating current generated by a three-phase generator, as well as with sensors disposed in the measuring head for detecting the rotational frequency of the rotating body and with a computing unit to which signals from the sensors are applied and which indicates the pressure of the gas around the rotating body, characterised by using a wattmeter (20) for the three-phase generator (9), the signals from said wattmeter being communicated to the computing unit (11).

FIG. 1

6

1

4a

8d    5a
8c    10b    8a

7b    13    7a    3

10a

8b    4b    5b

FIG. 2

12

17

14

11

24    28    19    16    15

26

9

21

23

18

$\frac{U_T}{U \cdot R}$

$\frac{U_\alpha}{\tau}$

25

$\frac{U \cdot I}{U_P}$

20

$\frac{U_T}{R}$

27

22